Europäisches Patentamt

European Patent Office

Office européen des brevets

(11) Numéro de publication : **0 446 149 A1**

# (12) DEMANDE DE BREVET EUROPEEN

(21) Numéro de dépôt : 91420056.3

(51) Int. Cl.⁵ : **G06F 15/40**

(22) Date de dépôt : **20.02.91**

(30) Priorité : **02.03.90 FR 9002901**

(43) Date de publication de la demande :
**11.09.91 Bulletin 91/37**

(84) Etats contractants désignés :
**AT BE CH DE DK ES GB GR IT LI LU NL SE**

(71) Demandeur : **Truong Trong Thi, André**
**2 Alleé des Pins**
**F-78350 Jouy En Josas (FR)**

(72) Inventeur : **Truong Trong Thi, André**
**2 Alleé des Pins**
**F-78350 Jouy En Josas (FR)**

(74) Mandataire : **Bratel, Gérard et al**
**Cabinet GERMAIN & MAUREAU B.P. 3011**
**F-69392 Lyon Cédex 03 (FR)**

(54) **Procédé d'archivage automatique de documents par voie numérique.**

(57) Dans la journée, les images des documents à saisir sont numérisées au scanner (6, 8), puis stockées sur un disque optique (5). Au cours de la nuit suivante, un ordinateur central (12) ou un micro-ordinateur (12') appelle les images des documents, les décrypte, et stocke dans sa mémoire les données portées par ces documents. Les documents non lus sont renvoyés sur une imprimante (31), puis saisis manuellement le jour suivant.

EP 0 446 149 A1

# PROCEDE D'ARCHIVAGE AUTOMATIQUE DE DOCUMENTS PAR VOIE NUMERIQUE

La présente invention se rapporte à un procédé d'archivage automatique de documents par voie numérique, ce procédé permettant le stockage de ces documents, sur disque optique par exemple, et leur recherche en cas de besoin.

Dans sa demande de brevet français FR-A-2 595 487, le Demandeur a décrit un dispositif d'archivage automatique de documents par voie numérique, du type utilisant au moins un appareil de numérisation, ou "scanner", et au moins un dispositif de stockage du document numérisé. Comme dispositif de stockage peut être, entre autres, utilisé un disque optique ou magnétique.

Le dispositif d'archivage décrit dans la demande de brevet français précitée comporte :

– un dispositif de saisie d'informations comprenant plusieurs micro-ordinateurs interconnectés par réseau local et pilotant chacun soit au moins un disque, ou analogue, de stockage numérique des informations, soit un scanner, chaque scanner étant préférentiellement connecté à sa sortie à une imprimante de compostage de chaque document après son passage dans ce scanner,

– et un dispositif d'exploitation des informations saisies, distinct de ce dispositif de saisie, et comprenant lui aussi plusieurs micro-ordinateurs interconnectés par réseau local, dont au moins un micro-ordinateur de visualisation sur écran de l'image extraite d'un disque précité, au moins un micro-ordinateur d'interrogation d'au moins un de ces disques, et un micro-ordinateur de liaison, ou "gate-way", à un ordinateur central dans lequel sont introduites les données apparaissant sur le document d'origine, en sortie du dispositif de saisie, par exemple en sortie de son imprimante de compostage.

Ce dispositif d'archivage fonctionne de la manière suivante :

Le document à archiver, par exemple une fiche d'assurance ou un courrier, est introduit manuellement dans un des scanners, où il est numérisé en même temps qu'un code lui est attribué. Dans le cas où le scanner est couplé à une imprimante de compostage, celle-ci composte le document lui-même à l'aide de ce code, de sorte que la feuille sort de l'imprimante avec le numéro de compostage matériellement imprimé. Simultanément, par l'intermédiaire du micro-ordinateur couplé à ce scanner, du réseau auquel est couplé ce micro-ordinateur, et du micro-ordinateur, ou serveur, qui relie ce réseau et le disque optique de stockage, toute l'image numérisée du document est stockée dans le disque optique précité.

Les données qui sont portées sur ce document sont alors saisies par une des opératrices de l'ordinateur central. Cette saisie se fait soit à l'aide de la feuille sortie de l'imprimante de compostage, si le dispositif en comporte une, soit par lecture de l'écran du micro-ordinateur couplé ou scanner. S'agissant par exemple d'une fiche d'assurance, l'opératrice saisit sur son clavier le nom de l'assuré, son prénom, son numéro d'immatriculation, et le numéro de référence ou de compostage qui porte entre autres la date.

Les inconvénients de ce mode de saisie en sont sa longueur, la nécessité d'avoir des opératrices pour procéder spécifiquement à la saisie sur clavier, et l'important risque d'erreurs qui découle de cette saisie sur clavier.

L'invention, qui vise à remédier à ces inconvénients, a en outre pour objet d'utiliser en temps masqué l'ordinateur central sans entraîner de supplément de coût. Les gros ordinateurs ne travaillent en effet généralement pas la nuit, faute d'opératrices, et il est regrettable qu'ils restent inutilisés pendant ce temps masqué, alors que leur puissance leur permet d'effectuer de gros travaux en un temps relativement court.

A cet effet, le procédé selon l'invention pour l'archivage automatique de documents par voie numérique consiste à numériser au scanner et à stocker sur un support d'informations (tel qu'un disque optique) l'image de chaque document en période de travail normale, puis, en temps masqué (par exemple de nuit), ou en temps réel, à faire appeler par un ordinateur central ou par un micro-ordinateur ces images les unes après les autres en les lui faisant décrypter, de façon à lui faire saisir et stocker dans sa mémoire l'ensemble des données portées par chacun de ces documents.

L'invention sera bien comprise, et ses avantages et autres caractéristiques ressortiront, au cours de la description suivante d'un exemple non limitatif de réalisation d'un dispositif d'archivage automatique, avec son procédé d'utilisation, en référence au dessin schématique annexé dont la figure unique est une vue d'ensemble de ce dispositif.

En se reportant à la figure unique, ce dispositif d'archivage automatique peut être intellectuellement décomposé en deux parties distinctes, dont une partie A dans laquelle est effectuée la saisie sur disque optique 5 des images correspondant chacune à un document à archiver, et une partie B qui comporte un ordinateur central 12 oui un micro-ordinateur 12' et dans laquelle est effectuée l'exploitation des données portées sur les documents archivés.

La partie "saisie" A comporte :

– trois micro-ordinateurs 1,2,3 interconnectés par un réseau local 4;

– le disque optique 5 de stockage de l'image numérisée de chaque document, ce disque 5 étant piloté par le micro-ordinateur (ou le serveur) 3 ;

– un premier scanner numériseur 6, associé ou non à une première imprimante de compostage 7 ; ce premier scanner 6 est piloté par le micro-ordinateur 1 ;

– un deuxième scanner numériseur 8, avec ou sans imprimante de compostage associée 9, piloté par le micro-ordinateur 2.

En fonctionnement, chaque document à stocker, par exemple une fiche d'assurance, est soit introduit manuellement en temps réel (c'est-à-dire pendant les heures de travail effectives des opératrices) dans le scanner 6 ou dans le scanner 8, soit introduit automatiquement. Le document (c'est-à-dire l'image qu'il représente) est numérisé dans ce scanner, et le cas échéant composté selon un code (par exemple un numéro) dans l'imprimante de compostage 7 ou 9 associée, et il sort finalement de cette imprimante de compostage (en 10 ou 11) avec le code de compostage matériellement imprimé ou en variante reconnu optiquement par le micro-ordinateur correspondant par un index. Ce document peut être soit archivé, soit détruit, mais momentanément il est prudent de le conserver tant que l'on n'a pas de certitude absolue sur la saisie de ses données par l'ordinateur central 12 ou le micro-ordinateur 12', comme il sera explicité ci-après.

Simultanément, par l'intermédiaire du micro-ordinateur 1 ou 2, du réseau 4, et du micro-ordinateur (ou du serveur) 3, toute l'image numérisée du document, comportant le code de compostage ou l'index reconnu optiquement, est stockée dans le disque optique 5.

La partie "exploitation" B comporte l'ordinateur central 12 ou le micro-ordinateur 12', ce dernier étant couplé respectivement par une ligne 13 ou par le réseau local 4 à par exemple quatre terminaux 14,15,16,17. Dans le cas d'un ordinateur 12, celui-ci est aussi couplé par l'intermédiaire d'un micro-ordinateur de couplage 18, ou "gate-way", au réseau local 4 précité.

Sur ce réseau local 4 sont branchés huit autres micro-ordinateurs :

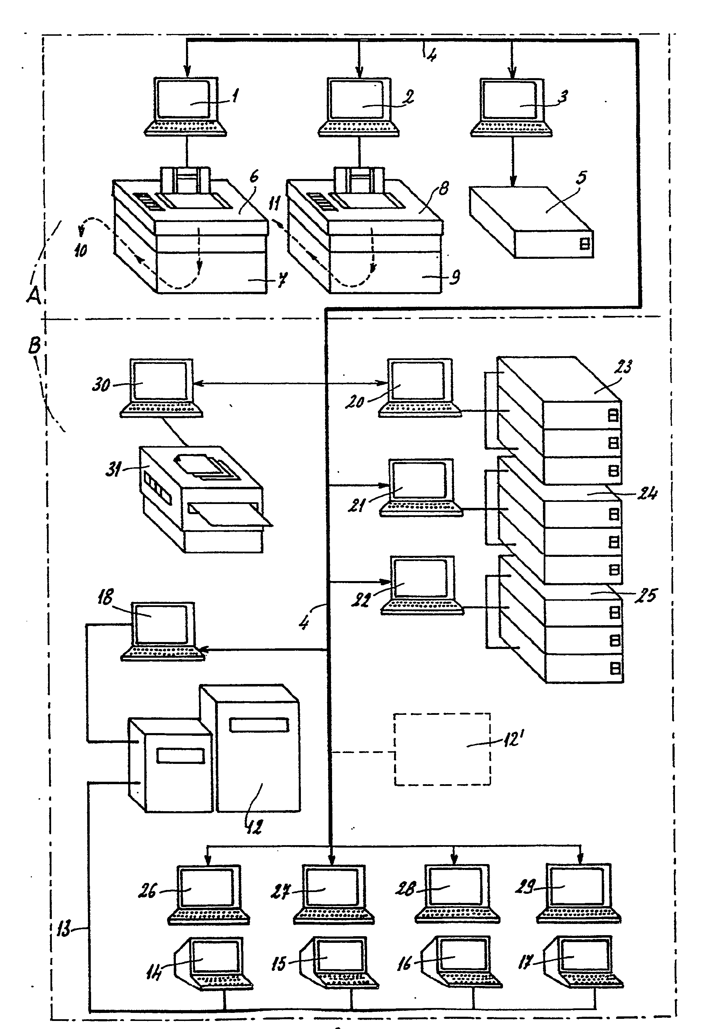

– trois micro-ordinateurs 20,21,22 destinés à rechercher les informations sur trois groupes 23,24,25 de trois disques optiques chacun ; chacun de ces disques optiques est un disque, tel que le disque 5, sur lequel les informations ont été stockées par la partie "saisie" A, et qui a été ensuite transporté manuellement dans le dispositif d'exploitation ; en variante selon le cas, les micro-ordinateurs 20,21,22 pourraient aussi être branchés sur des disques 5 de la figure 1, sans que ceux-ci aient été physiquement déplacés comme c'est le cas dans l'exemple représenté ;

– quatre micro-ordinateurs 26,27,28,29 de visualisation du document extrait de l'un des disques des groupes 23 à 25 ; comme représenté, chaque ordinateur de visualisation 26 à 29 est associé à un terminal 14 à 17 et est par exemple placé au-dessus de celui-ci pour pouvoir être vu par l'opératrice correspondante ;

– un micro-ordinateur 30 de liaison à une imprimante à laser 31.

L'ordinateur central 12 est programmé pour extraire en temps masqué, c'est-à-dire en fait pendant la nuit qui suit une journée de travail des opératrices, et par l'intermédiaire du "gate-way" 18, du réseau 4, et du micro-ordinateur 3, successivement chacune des images qui ont été stockées, après numérisation, dans le disque optique 5. Selon le même programme, ces images sont décryptées (décodées) une à une, c'est-à-dire que les informations qu'elles contiennent sont lues de manière "intelligente" par l'ordinateur 12, et ce dernier stocke les informations, qu'il a lues de cette façon, dans sa mémoire. Il effectue donc seul la saisie des données qui était, dans le procédé décrit dans la demande de brevet français FR-A-2 595 487 précitée, effectuée manuellement par une opératrice sur un des claviers 14 à 17.

La saisie étant réalisée de nuit est effectuée rapidement, sans erreurs, en utilisant toute la puissance de l'ordinateur 12. En variante, cette saisie est réalisable par le micro-ordinateur 12', selon le même processus.

Dans le cas où un document ne peut pas être lu par l'ordinateur 12 ou le micro-ordinateur 12', parce que ce dernier n'est pas programmé pour effectuer la lecture de ce document particulier, l'ordinateur le fait automatiquement enregistrer, via le "gate-way" 18, le réseau 4 et le micro-ordinateur 30, dans l'imprimante 31 ou le micro-ordinateur 30 lui-même. Au matin, l'opératrice n'a plus qu'à recueillir les quelques feuilles issues pendant la nuit de l'imprimante 31, ou à faire défiler les documents sur l'écran du micro-ordinateur 30, et à en effectuer la saisie manuelle en utilisant un des terminaux 14 à 17.

Au matin également, le disque 5 qui a été rempli la journée précédente est transporté sur une des piles de disques 23 à 25, et remplacé par un autre disque vide qui, connecté au micro-ordinateur 3, est prêt à recevoir d'autres images numérisées de fiches, courriers ou autres documents...

En variante, le programme "nocturne" de l'ordinateur central 12 peut aussi commander le transfert total et définitif de chacune des images stockées dans le disque 5 vers un disque vide d'une des piles 23 à 25 : le disque 5 se retrouve alors vide au matin, et il est prêt à se remplir dans la journée avec d'autres documents.

L'utilisation "diurne" de ce dispositif d'archivage automatique s'effectue là encore de la façon suivante, qui ne diffère en rien de celle relative au dispositif selon la demande de brevet précitée :

On suppose que l'on veuille retrouver une fiche

4

d'assurance, connaissant le numéro d'immatriculation de l'assuré et la date du document, celui-ci étant par exemple une quittance de remboursement.

L'opératrice tape sur son clavier, par exemple le clavier du terminal 14 ou du micro-ordinateur 12', le numéro d'immatriculation en question. Il s'affiche, entre autres, sur l'écran du terminal 14 ou du micro-ordinateur 12', les index recherchés.

L'ordinateur 12 (ou le micro-ordinateur 12') interroge alors, via le micro-ordinateur 18, le réseau local 4, et les trois micro-ordinateurs 20,21,22, tous les disques stockés en 23,24,25. Il y retrouve la fiche recherchée et commande toujours via le réseau local 4, l'affichage de celle-ci sur l'écran du micro-ordinateur 26 par exemple. L'opératrice placée en 14 ou en 12' a donc devant ses yeux l'image de la fiche recherchée. Il est à noter que si par hasard le micro-ordinateur 26 est en panne, on peut très bien, à partir du clavier 14 ou du micro-ordinateur 12', commander la visualisation de cette fiche sur un autre écran, par exemple sur celui du micro-ordinateur voisin 27.

Si l'on désire alors obtenir une copie matérielle du document en question, on commande sur le clavier 14 ou sur le micro-ordinateur 12' l'opération de copie, via le réseau local 4 et le micro-ordinateur 30, de ce document par l'imprimante laser 31.

Ce dispositif est modulable à volonté, du fait qu'il utilise substantiellement un micro-ordinateur par fonction, tous les micro-ordinateurs étant couplés par un réseau local ; pour rajouter par exemple une fonction, il suffit de coupler un autre micro-ordinateur sur ce réseau local.

Comme il va de soi, l'invention n'est pas limitée à l'exemple de réalisation qui vient d'être décrit. Les micro-ordinateurs de liaison pourraient être remplacés par des serveurs remplissant le même office. D'autres dispositifs de liaison pourraient être prévus : par exemple les micro-ordinateurs 1 à 3 pourraient être branchés sur un premier réseau local, qui serait lui-même relié à l'ordinateur central 12 par un "gateway" supplémentaire, tandis que les micro-ordinateurs 18, 20, 21, 22 et 26 à 30 seraient eux-mêmes branchés sur un second réseau local comme c'est le cas pour le dispositif selon la demande de brevet français précitée. Dans le cas où le temps n'est pas impératif, l'opération de décryptage peut se faire directement sur les micro-ordinateurs 1, 2, 3 ou sur un micro-ordinateur faisant office de serveur de décryptage.

**Revendications**

1. Procédé d'archivage automatique de documents par voie numérique, caractérisé en ce qu'il consiste, en période de travail normale, à numériser au scanner (6, 8), et à stocker sur un support d'informations (5), l'image de chaque document, puis, en temps masqué ou en temps réel, à faire appeler par un ordinateur central (12) ou un micro-ordinateur (12') ces images les unes après les autres en les lui faisant décrypter de façon à lui faire saisir et stocker dans sa mémoire l'ensemble des données portées par chacun de ces documents.

2. Procédé d'archivage automatique selon la revendication 1, caractérisé en ce que l'ordinateur central (12) ou le micro-ordinateur (12') est programmé pour effectuer automatiquement la saisie de ces documents dans la nuit qui suit la journée au cours de laquelle leurs images ont été numérisées au scanner (6, 8) et stockées sur le support d'informations (5).

3. Procédé d'archivage automatique selon la revendication 1 ou 2, caractérisé en ce que l'ordinateur (12) ou le micro-ordinateur (12') est programmé pour renvoyer sur une imprimante (31) ou un micro-ordinateur (30) les documents qu'il n'est pas capable de décrypter, de sorte qu'après les opérations de saisie par cet ordinateur (12, 12') du contenu dudit support d'informations (5), une opératrice puisse recueillir l'ensemble des feuilles issues de cette imprimante (31), ou faire défiler les documents sur l'écran dudit micro-ordinateur (30), et en effectuer la saisie manuelle.

Office européen
des brevets

**RAPPORT DE RECHERCHE EUROPEENNE**

Numero de la demande

EP 91 42 0056

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,Y | FR-A-2 595 487 (A. TRUONG TRONG THI) <br> * Document en entier * | 1-3 | G 06 F 15/40 |
| Y | RESEARCH DISCLOSURE 170013, 10 juin 1978, The U.K. Post Office: "Document storage and facsimile transmission system" <br> * Résumé * | 1-3 | |
| A | PATENT ABSTRACTS OF JAPAN, vol. 13, no. 96 (P-839)[3444], 7 mars 1989; & JP-A-63 278 155 (FUJITSU LTD) 15-11-1988 <br> * Résumé * | 1-3 | |
| A | FR-A-2 280 273 (R. LEMKE) <br> * Page 2, lignes 12-28 * | 1-3 | |

**DOMAINES TECHNIQUES RECHERCHES (Int. Cl.5)**

G 06 F 15/40

Le présent rapport a été établi pour toutes les revendications

| Lieu de la recherche | Date d'achèvement de la recherche | Examinateur |
|---|---|---|
| LA HAYE | 27-05-1991 | KATERBAU R.E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)